Europäisches Patentamt

European Patent Office

Office européen des brevets

(19)

(11) Veröffentlichungsnummer: **0 245 389**
**B1**

(12) **EUROPÄISCHE PATENTSCHRIFT**

(45) Veröffentlichungstag der Patentschrift:
03.05.89

(21) Anmeldenummer: 86906768.6

(22) Anmeldetag: 13.11.86

(86) Internationale Anmeldenummer:
**PCT/DE 86/00465**

(87) Internationale Veröffentlichungsnummer:
**WO 87/03078 (21.05.87 Gazette 87/11)**

(51) Int. Cl.⁴: **F 27 B 9/20, F 27 B 9/12**

(54) DURCHLAUFOFEN.

(30) Priorität: 16.11.85 DE 3540764

(43) Veröffentlichungstag der Anmeldung:
19.11.87 Patentblatt 87/47

(45) Bekanntmachung des Hinweises auf die Patenterteilung:
03.05.89 Patentblatt 89/18

(84) Benannte Vertragsstaaten:
DE FR GB IT NL

(56) Entgegenhaltungen:
BE-A- 409 933
DE-A- 2 947 787
DE-A- 3 017 434
DE-C- 418 103
FR-A- 2 405 448

(73) Patentinhaber: RIEDHAMMER GMBH UND CO. KG,
Schleifweg 45, D-8500 Nürnberg 10 (DE)

(72) Erfinder: GRÜN, Rüdiger, Samstagstrasse 10,
D-8560 Lauf (DE)
Erfinder: KÖLLN, Bernd, Eichenstrasse 8,
D-8501 Ammerndorf (DE)

(74) Vertreter: Becker, Thomas, Dr., Dipl.-Ing. et al,
Patentanwälte Becker & Pust Eisenhüttenstrasse 2,
D-4030 Ratingen 1 (DE)

## Beschreibung

Die Erfindung betrifft einen Durchlaufofen für feinkeramisches Brenngut. Unter dem Begriff „Durchlaufofen" werden erfindungsgemäss alle Typen von Öfen verstanden, bei denen das Material im Durchlaufverfahren kontinuierlich gebrannt wird. Hierzu zählen beispielsweise Rollenöfen, aber auch Schlittenöfen oder dergleichen.

Ein derartiger Durchlaufofen weist vom Ofeneingang zum Ofenausgang eine Aufheizzone, eine mit Brennern versehene Brennzone sowie eine sich daran anschliessende Kühlzone auf.

Die Erfindung bezieht sich auf einen derartigen Durchlaufofen mit einer am Brenngut-Eintritt angeordneten Gastransporteinrichtung, welche Gas entgegen der Förderrichtung des Brenngutes (von der Aufheiz- zur Kühlzone) von zumindest der Brennzone bis zum Brenngut-Eintritt ansaugt und zumindest einer Lufttransporteinrichtung zur Zuführung von Luft zur Kühlzone. Darüber hinaus betrifft die Erfindung ein Verfahren zum Betrieb eines derartigen Durchlaufofens.

Wie die DE-C 30 17 434 zeigt, kann beim Band von Grobkeramik wie Ziegeln oder Dachziegeln in Tunnelöfen mit Brenndauern von etwa 50 bis 60 Stunden zur Energieeinsparung Luft im Gegenstrom von der Kühl- bis in die Aufheizzone angesaugt werden. Für Feinkeramik, beispielsweise Fliesen, ist dies aufgrund der Empfindlichkeit des Brenngutes nicht möglich, bei dem über die Ofenlänge ein bestimmtes Temperaturprofil genau eingehalten werden muss. Ein hoher Durchsatz und eine gewisse Energieeinsparung kann bei feinkeramischen Brenngut durch den Einsatz von Schnellbrandöfen, zum Beispiel Rollenöfen erreicht werden, da die Rollen auf gleichbleibender Temperatur gehalten werden und nicht bei jedem Brennvorgang eine neue Aufheizung der Rollen erforderlich ist.

Jedoch sind zur Einstellung und Aufrechterhaltung der Temperaturprofile zahlreiche getrennte Vorrichtungen für den Luft- und Abgastransport erforderlich. Der Gegenstromzug darf hierbei keinesfalls über die Brennzone noch in die Kühlzone hineinreichen, da sonst der Brennvorgang stark gestört wird und die Ausschussrate sich drastisch erhöht.

Der Erfindung liegt die Aufgabe zugrunde, einen Durchlaufofen und ein Verfahren zum Betrieb eines Durchlaufofens zur Verfügung zu stellen, mit denen eine Energieersparung ermöglicht und der apparative Aufwand verringert wird.

Bezüglich des Durchlaufofens wird die Aufgabe dadurch gelöst, dass die Gastransporteinrichtung Gase aus dem Bereich der Kühlzone saugt und direkt durch den Ofenkanal in die Brennzone transportiert, und dass in einem Übergangsbereich zwischen Brennzone und Kühlzone zumindest ein zusätzlicher Brenner angeordnet ist. Dabei werden die aus der Kühlzone transportierten Gase auf Brenntemperatur aufgeheizt.

In überraschender Abkehr vom Stand der Technik kann mittels der Erfindung (kältere) Luft aus der Kühlzone in die Brennzone gesaugt werden. Da am Beginn der Kühlzone die durch das Brenngut erwärmte Kühlluft bereits eine Temperatur von etwa 800° bis 900° C aufweist, muss der zusätzliche Brenner nur noch soviel Energie aufbringen, um die Erhitzung auf Brenntemperatur, bei Fliesen etwa im Bereich von 1 200° C zu bewirken. Versuche in der Vergangenheit, die aus der Kühlzone abgeführte heisse Luft von etwa 800° C den Brennern in der Brennzone zuzuführen, schlugen fehl, da die Leitungen mit den darin angeordneten Ventilen, Messinstrumenten und Ventilatoren dieser hohen Temperatur, wenn überhaupt, nur für eine kurze Zeit standhielten, wodurch hohe Reparaturkosten entstanden.

Diese Probleme entfallen aufgrund der erfindungsgemässen Lösung, bei der Gase innerhalb des Ofens angesaugt werden. Eine Störung des Temperaturprofiles in der Brennzone wird durch die Erwärmung mittels zusätzlicher Brenner, die aber nunmehr nur noch eine erheblich kleinere Temperaturdifferenz ausgleichen müssen, sicher vermieden. Die erzielbaren Energieeinsparungen sind beträchtlich und liegen in einem Bereich von etwa 40% bis 50%. Dies betrifft zunächst nur den Energieverbrauch der Brenner.

Bei einem Vorschlag gemäss der DE-A 29 47 787 werden in der Kühlzone eines Brennofens Zusatzbrenner vorgesehen. Diese, über die Kühlzone verteilten Brenner haben jedoch eine andere Aufgabe, nämlich bei Störungen des Ofenbetriebs einen Wärmeausgleich zu schaffen.

Eine weitere Reduzierung der zum Betrieb erforderlichen Energie kommt gemäss der Erfindung dadurch zustande, dass erheblich weniger elektrische Energie verbraucht wird, da nunmehr nur noch ein Ventilator am Ofeneingang, zum Ansaugen der Gase im Gegenstrom zur Förderrichtung des Brenngutes, und ein zweiter Ventilator zum Frischluftfördern erforderlich sind. Alle zusätzlichen, früher benötigten Ventilatoren können entfallen. Damit wird auch die Störsicherheit eines erfindungsgemässen Durchlaufofens erhöht.

Gemäss einer vorteilhaften Ausgestaltung der Erfindung entnimmt der zusätzliche Brenner seine Verbrennungsluft nur dem Innenraum des Durchlaufofens. Der Brenner kann hierdurch besonders einfach aufgebaut sein.

Besonders vorteilhaft ist es, wenn mehrere zusätzliche Brenner, vorzugsweise in beiden Seitenwänden des Ofens sich gegenüberliegend angeordnet sind.

Nach einer weiteren vorteilhaften Ausführungsform der Erfindung ist die Kühlzone in einen Schnellkühlabschnitt und zumindest einen, vorzugsweise mehrere Kühl-Unterabschnitte unterteilt. Nach der sogenannten Sturzkühlung kommen also noch weitere Kühlabschnitte, in denen zunächst ein Abfall der Temperatur von etwa 650° C auf etwa 200° C erfolgt und schliesslich eine weitere Schnellkühlung, zum Beispiel auf Umgebungstemperatur. So kann auf einfache Weise die im Bereich des Quarzsprunges (etwa 575° C) erforderliche langsamere Abkühlung sichergestellt werden. Die Saugwirkung des am Ofeneingang angeordneten Ventilators stört hierbei überraschenderweise nicht.

Eine weitere Energieeinsparung kann erreicht werden, wenn die Saugwirkung des am Ofeneingang angeordneten Ventilators bis an die Stelle in der Kühlzone reicht, in der eine Lufttemperatur von etwa 300° C herrscht. Aufgrund des Gegenstromes in der Kühlzone wird nämlich jeweils kältere Luft in Bereiche geführt, in denen das Brenngut eine höhere Temperatur hat, und trägt so zur Kühlwirkung bei. Es muss deswegen weniger „kalte" Frischluft zugeführt werden. Nach dem Stand der Technik musste darüber hinaus auch die erwärmte Luft aus den einzelnen Unterabschnitten getrennt abgeführt werden, ohne dass sie für die Kühlung zur Verfügung stand; auch die hierfür erforderlichen elektrischen Energien lassen sich gemäss der Erfindung einsparen.

Vorzugsweise sind in der Brennzone die Brenner in unregelmässigen Abständen voneinander angeordnet. Es hat sich herausgestellt, dass das erforderliche Temperaturprofil auch dann aufrechterhalten werden kann, wenn einige Brenner weggelassen werden. Dies führt zu einer weiteren Energieeinsparung und verringert die Herstellungskosten.

Gemäss einer weiteren vorteilhaften Ausführungsform der Erfindung ist sogar in der Brennzone ein grösserer Bereich vorgesehen, der nicht mit Brennern bestückt ist, und an den sich vorn und hinten in Förderrichtung des Brenngutes mit Brennern bestückte Brennzonen anschliessen. Es hat sich gezeigt, dass hierdurch nicht nur die vorstehend genannten Einsparungen erzielbar sind, sondern ein weiterer Vorteil hinzukommt: Wegen der von der Kühlzone zugeführten sauerstoffreichen Luft in den Bereich, der nicht mit Brennern bestückt ist, verbessert sich dort auch das Verhalten des Brenngutes in bezug auf das Ausgasen organischer Bestandteile. Hierdurch lässt sich ohne Qualitätseinbussen die Durchlaufrate von Brenngut durch den Ofen erhöhen.

Prinzipiell kann der zusätzliche Brenner so aufgebaut sein wie die übrigen herkömmlichen Brenner in der Brennzone. Gemäss einer besonders einfachen und billigen Ausführungsform der Erfindung umfasst der zusätzliche Brenner ein Brennerrohr, dessen einer Endabschnitt mit einer Vorrichtung zum Anschluss einer Brennstoffleitung versehen ist, und dessen anderer Endabschnitt zumindest eine Ausnehmung zum Ansaugen von Verbrennungsluft aufweist. Das Brennerrohr soll dabei im Inneren mit einer Brennstoff-Führungseinrichtung versehen sein, die in eine Brennstoffdüse übergeht, die vor der Ausnehmung endet. Der Brenner benötigt also nur einen Brennstoffanschluss und saugt seine Verbrennungsluft über die Ausnehmung an dem ins Ofeninnere ragenden Endabschnitt an. Die Brennflamme bildet sich an der Düsenöffnung aus.

Vorzugsweise besteht das Brennerrohr aus Keramik. Es ist dann einfach und kostengünstig herzustellen und weist eine relativ lange Lebensdauer auf.

Eine besonders vorteilhafte Flammenform und damit ein gleichmässiger Betrieb des Brenners ergibt sich, wenn im Bereich der Austrittsöffnung der Flammen seitlich zwei symmetrisch angeordnete Ausnehmungen in ovaler Form vorgesehen sind, wobei die längere Achse des jeweiligen Ovals parallel zur Brennerrohr-Längsachse verläuft.

Die Erfindung schlägt ausserdem ein Verfahren zum Betrieb des vorstehend genannten Durchlaufofens mit folgenden Schritten vor:

Zunächst erfolgt ein Ansaugen der Gase mittels der Gastransporteinrichtung aus der Kühlzone im Gegenstrom zur Förderrichtung des Brenngutes direkt durch den Ofenkanal in die Brennzone hinein. Vor Eintritt der angesaugten Gase in die Brennzone wird die Erhitzung der Gase auf Brenntemperatur durchgeführt.

Die beschriebenen Vorteile gelten ebenso auch für das erfindungsgemässe Verfahren. Wegen der relativ sauerstoffreichen Luft, die aus der Kühlzone des Ofens angesaugt wird, verbessern sich auch die Brennverhältnisse in der Brennzone. Es können deshalb bei einem erfindungsgemässen Verfahren die Brenner mit stöchiometrischer oder sogar unterstöchiometrischer Verbrennung betrieben werden, was den Energieverbrauch weiter senkt.

Weiterhin schlägt die Erfindung vor, zum Erhitzen der geförderten Gase zumindest einen Brenner zu verwenden, der nur mit Brennstoff versorgt wird und seine Verbrennungsluft der Luft entnimmt, die in die Brennzone hineingezogen wird. Dabei wird der Brenner bevorzugt mit Gas betrieben. Sowohl bei der erfindungsgemässen Vorrichtung als auch bei dem zugehörigen Verfahren ist aber auch die Verwendung von beispielsweise Heizöl oder Gas als Brennstoff möglich.

Nach einer vorteilhaften Ausführungsform der Erfindung soll sich die Kühlluft im Schnellkühlabschnitt auf etwa 800° bis 900° C erwärmen. Ein sich hieran anschliessender weiterer Kühlabschnitt dient dann zur langsameren Abkühlung in Förderrichtung des Brenngutes auf etwa 200° C (Lufttemperatur). Die Saugwirkung der Gastransporteinrichtung reicht hierbei etwa bis in den Bereich des Kühlabschnittes, in dem eine Temperatur von etwa 300° C herrscht.

Auf diese Weise lässt sich ein besonders gutes Brennergebnis bei maximaler Energieeinsparung erreichen.

Schliesslich schlägt die Erfindung auch noch das Ansaugen von Frischluft mittels einer einzigen Luftfördervorrichtung vor, und zwar im Bereich des in Förderrichtung des Brenngutes letzten Kühlabschnittes, wobei diesem Kühlabschnitt Frischluft von der Austrittsöffnung des Durchlaufofens zugeführt wird. Damit lässt sich das Temperaturprofil optimal einstellen und es wird besonders wenig Energie verbraucht.

Die Erfindung wird nachstehend anhand eines Ausführungsbeispieles, das in der Zeichnung dargestellt ist, näher erläutert. Hieraus ergeben sich weitere Vorteile und Merkmale der Erfindung.

Dabei zeigen in schematischer Darstellung:

Fig. 1 eine Seitenansicht des Eingangsabschnittes mit Saugventilator und drei Vortrockner;

Fig. 2 eine Seitenansicht einer Zwischenstufe und des ersten Bereiches der Brennzone;

Fig. 3 eine Seitenansicht eines weiteren Teiles der Brennzone, in dem Brenner in unregelmässigen Abständen angeordnet sind;

Fig. 4 eine Seitenansicht eines weiteren Teiles der Brennzone mit regelmässig angeordneten Brennern;

Fig. 5 eine Seitenansicht eines Schnellkühlabschnittes und eines ersten Kühlabschnittes;

Fig. 6 eine Seitenansicht eines zweiten und dritten Kühlabschnitts;

Fig. 7 eine Seitenansicht eines Nachkühlabschnitts, und

Fig. 8 eine Schnittdarstellung eines zusätzlichen Brenners gemäss der Erfindung;
eines Durchlaufofens gemäss der Erfindung.

Allgemein wird zunächst darauf aufmerksam gemacht, dass in mehreren Figuren dargestellte Teile häufig nur einmal mit Bezugszeichen bezeichnet werden, um eine bessere Übersichtlichkeit und eine Beschränkung auf wesentliche Einzelheiten zu erreichen.

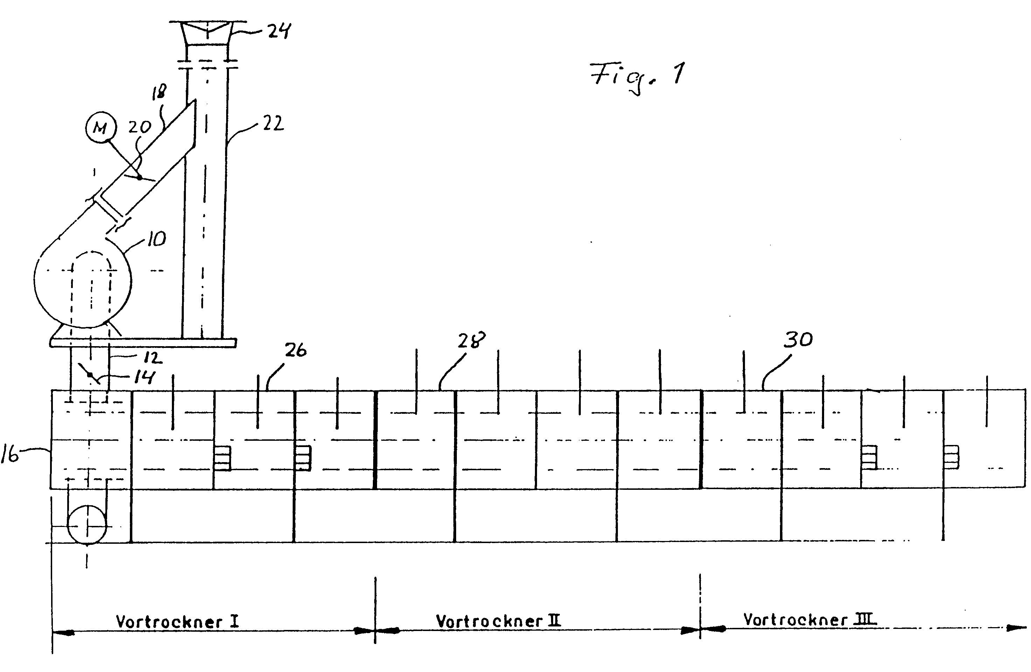

In Fig. 1 ist der Eingangsbereich, bezogen auf das Brenngut, eines Rollenofens gezeigt, der in der Aufheizzone drei Vertrockner 26, 28, 30 aufweist. Das Brennugt wird einer Beschickungsöffnung 16 zugeführt. In diesen Bereich mündet ein mit einer Klappe 14, mit welcher der Gasdurchsatz eingestellt werden kann, versehener Rohrleitungskanal 12, der zu einem Saugventilator 10 führt. Mit dem Ventilator 10 wird Gas aus dem Rollenofen abgesaugt, so dass sich im überwiegenden Bereich des gesamten Ofens ein Unterdruck einstellt. Das abgesaugte Gas wird vom Ventilator 10 über ein Rohr 18, in dem eine weitere, motorbetätigte Steuerklappe 20 angebracht ist, einem Abluftkamin 22 zugeführt, den eine Kaminklappe 24 nach oben abschliesst. Der Kanal 12 ist an die Ober- und Unterseite des im Querschnitt rechteckigen Rollenofens geführt, um einen gleichmässigen Zug zu gewährleisten.

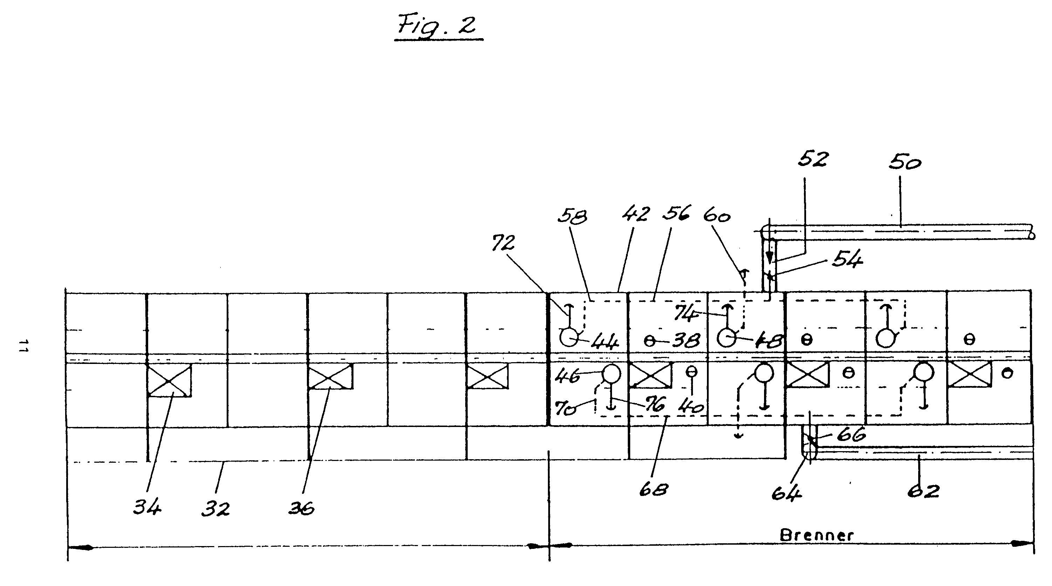

Vom Vortrockner 30 gelangt das Brenngut, wie in Fig. 2 dargestellt, in einen Übergangsbereich 32. Dieser Bereich ist, wie auch die nachfolgenden Bereiche des Durchlaufofens, mit Inspektionsklappen, beispielsweise 34, 36 versehen, die bei Betriebsstörungen oder für Wartungszwecke geöffnet werden können und einen Zugang zu dem betreffenden Abschnitt ermöglichen.

An den Übergangsbereich 32 schliesst sich die Brennzone an, und zwar zunächst ein Brennabschnitt 42. In diesem Abschnitt sind zwölf Brenner vorgesehen, von denen in Fig. 2 die auf einer der beiden Seitenwände des Ofens angeordneten sechs Brenner erkennbar sind, drei davon sind mit den Bezugsziffern 44, 46 und 48 bezeichnet. Über eine obere Frischluftleitung 50 und einen Leitungsabschnitt 52 wird, gesteuert über eine Klappe 54, Frischluft einer Leitung 56 zugeführt, die in der Ofenseitenwand verläuft, um die Frischluft zu erwärmen. Die erwärmte Frischluft wird über Leitungen 58 und 60 den Brennern 44 bzw. 48 zugeführt. Mit Brennstoff (bei dem vorliegenden Ausführungsbeispiel Gas) werden die Brenner 44, 48 über Rohrleitungen 72 beziehungsweise 74 versorgt. Eine gleiche Brenneranordnung ist, in Transportrichtung des Brenngutes versetzt, auf der gegenüberliegenden, nicht dargestellten Seitenwand angeordnet, zum Beispiel dort, wo die Sichtklappen 38, 40 dargestellt sind.

In der Ofen-Seitenwand sind Sichtklappen, zum Beispiel 38 und 40, vorgesehen sowie nicht weiter bezeichnete Inspektionsklappen.

Symmetrisch, aber etwas in Förderrichtung des Brennguts versetzt, zu den im oberen Bereich des Brennabschnitts angeordneten Brennern 44, 48 usw. sind untere Brenner angeordnet, von denen der erste mit 46 bezeichnet ist. Der Brenner 46 erhält Frischluft über eine Leitung 70, einen in der Ofenwand zur Erwärmung angeordneten Leitungsabschnitt 68 und eine nach unten führende Leitung 64, in der eine Steuerklappe 66 sitzt. Als zentrale Versorgungsleitung für den unteren Bereich dient, ähnlich wie die Leitung 50 im oberen Bereich, eine Leitung 62. Die Gaszufuhr zum unteren Brenner 46 und den weiteren zwei unteren Brennern erfolgt über Gaszufuhrleitungen, beispielsweise 76 zum Brenner 46.

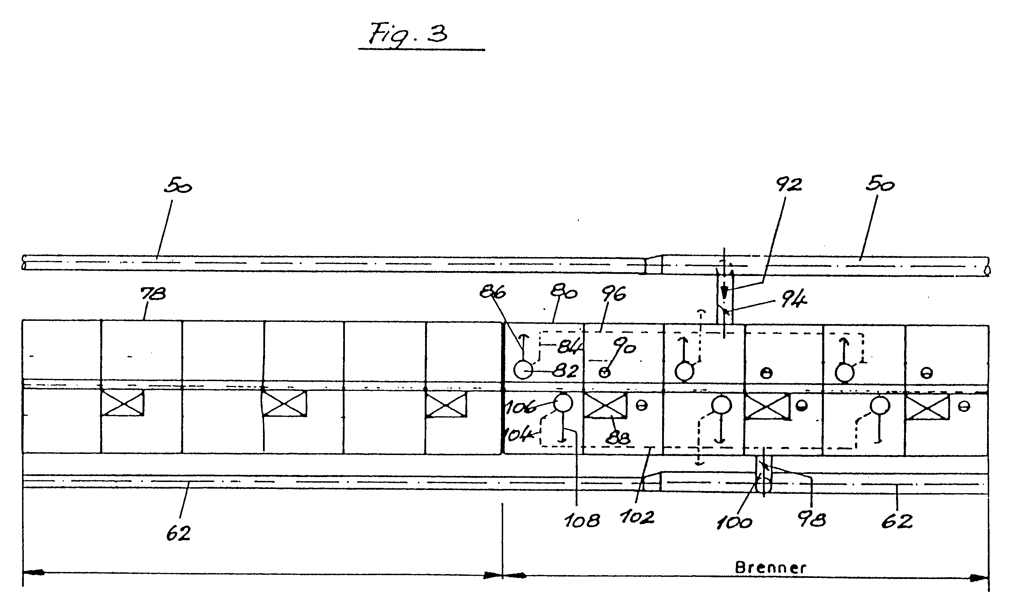

In Fig. 3 ist der an den Brennabschnitt 42 anschliessende Bereich dargestellt, zunächst ein nicht mit Brennern bestückter Brennabschnitt 78 und ein wiederum darauf folgender Abschnitt 80. Im Brennabschnitt 80 sind im oberen Teil der dargestellten Seitenwand drei Brenner, z. B. 82, und im unteren Bereich ebenfalls drei Brenner, z. B. 106, angeordnet, so dass dieser Teil der Brennzone in beiden Seitenwänden zusammen 12 Brenner aufweist. Ähnlich wie bereits vorstehend beschrieben wird oben von der Leitung 50 Frischluft über ein Rohr 92 mit Steuerklappe 94 einer in der Ofenwandung angeordneten Leitung 96 zugeführt, von der es über eine Leitung 84 zum Brenner 82 gelangt, dem Gas über eine Anschlussleitung 86 zugeführt wird.

Im unteren Bereich erfolgt die Frischluftzufuhr von der Leitung 62 aus über ein Rohr 100 mit Steuerklappe 98, das über eine Leitung 102, 104 zum unteren Brenner 106 führt. Der Brenner 106 wird von einer Gasleitung 108 mit Gas versorgt.

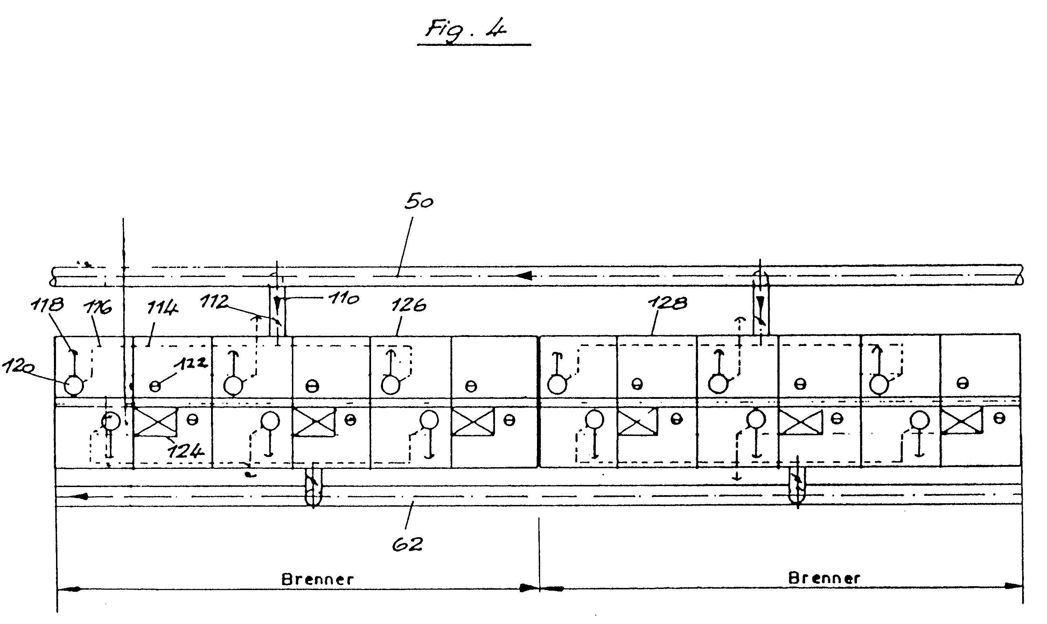

Auf den Brennabschnitt 80 folgt, wie aus Fig. 4 ersichtlich, ein Brennabschnitt 126 und dann ein Brennabschnitt 128. Beide sind, auf gleiche Weise wie der Brennabschnitt 80, mit jeweils 12 Brennern versehen, von denen beispielhaft nur ein oberer Brenner 120 mit einer Bezugsziffer bezeichnet ist.

Der Brenner 120 wird über eine Leitung 118 mit Gas und über Leitungen 116, 114 und 110, die schliesslich zur Leitung 50 führt, mit Frischluft versorgt. Zur Steuerung ist, wie bereits beschrieben, im Rohrleitungsabschnitt 110 eine Klappe 112 angeordnet. Für die unteren Brenner, die Frischluft von der Leitung 62 erhalten, gilt entsprechendes.

Auch in den Seitenwänden der Brennabschnitte 126, 128 sind Sicht- (122) und Inspektionsklappen 124 vorgesehen.

Nach dem vorbekannten Stand der Technik durfte sich die Saugwirkung eines am Ofenanfang angeordneten Ventilators höchstens bis zum Brennabschnitt 128, nicht aber darüber hinaus, erstecken.

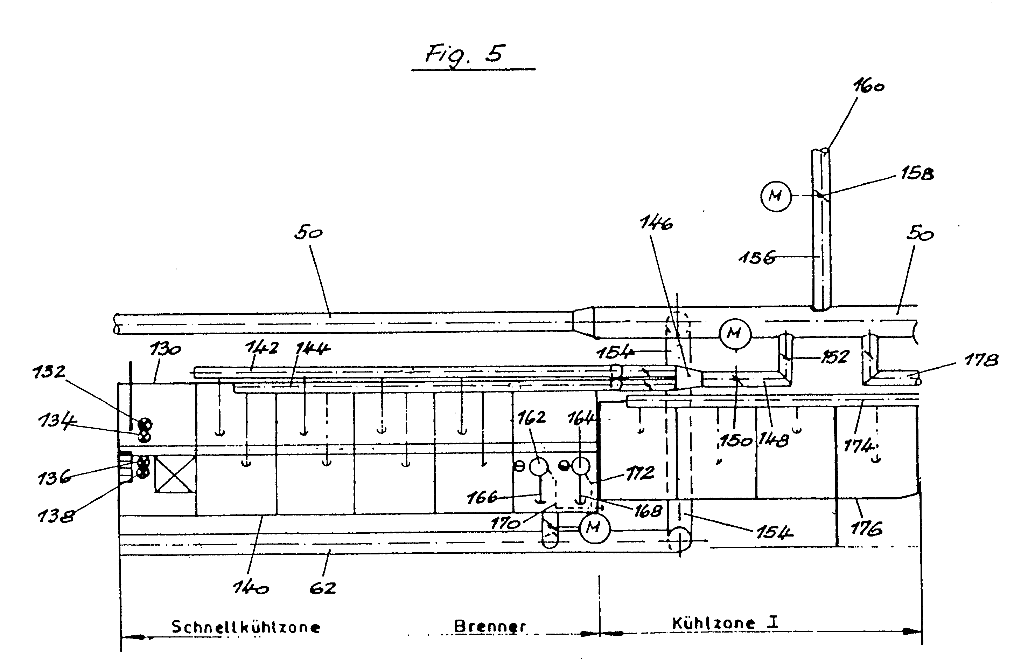

In Fig. 5 ist ein erster Abschnitt der Kühlzone dargestellt. In einem Übergangsabschnitt sind zusätzliche Brenner zur Erhitzung der Gase vorgesehen, die gemäss der Erfindung aus der Kühlzone in die Brennzone gezogen werden.

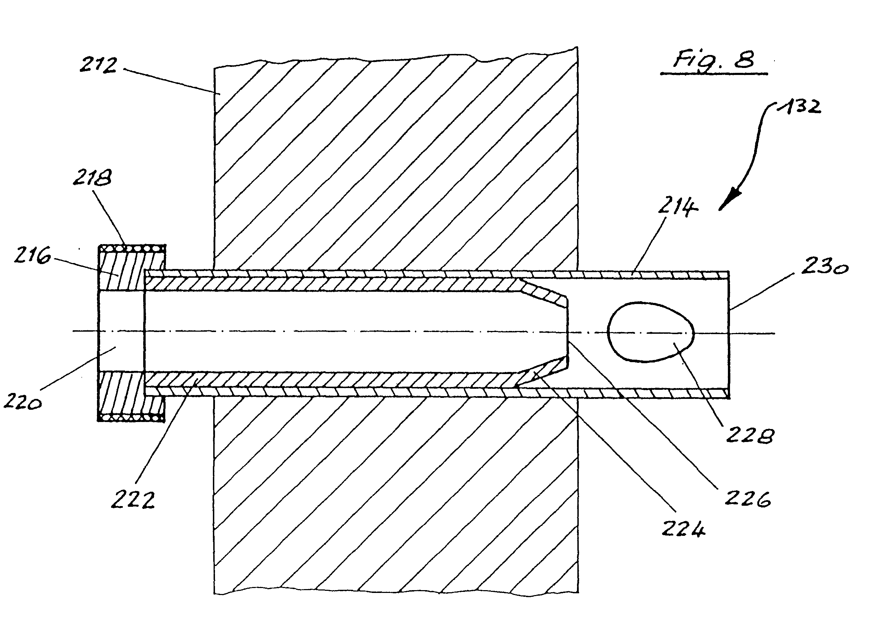

In jeder Seitenwand des Übergangsabschnitts 130 sind 4 zusätzliche Brenner 132, 134, 136 und 138 angeordnet, die nachfolgend noch genauer unter Bezug auf Fig. 8 erläutert werden. Insgesamt ist der Abschnitt 130 daher mit 8 Brennern bestückt.

Vom Übergangsabschnitt 30 gelangt das Brenngut in einen Schnellkühlabschnitt 140, in der das Brenngut mit aus den oben auf dem Ofen verlaufenden Leitungen 142, 144 austretender Luft beaufschlagt wird. Da sich die Saugwirkung des Ventilators 10 am Ofenanfang (Fig. 1) aber noch über den Schnellkühlabschnitt 140 hinaus erstreckt, erfolgt eine zusätzliche Kühlung durch aus dem nächsten Kühlabschnitt geförderte Gase.

Die Leitungen 142, 144 münden in einer Verzweigung 146, von der eine Leitung 148, in der Steuerklappen 150 (motorgesteuert) und 152 angeordnet sind, zur oberen zentralen Leitung 50 führt. Diese ist mit einem Abblasrohr 156 versehen, das eine Abblasöffnung 160 aufweist, und die Abblasmenge kann mittels einer motorbetätigten Klappe 158 eingestellt werden.

Im hinteren Bereich des Schnellkühlabschnittes 140 in jeder Seitenwand sind Brenner 162, 164 angeordnet, die Frischluft über Leitungen 170 bzw. 172 und Gas über Leitungen 166 bzw. 168 zugeführt erhalten. Diese Brenner sind für eine Einstellung des Abkühlprofils vorgesehen, wenn die Brenngutbeschickung unregelmässig ist, oder aber beim Anfahren des Ofens, wenn noch kein Brenngut in der Kühlzone ist.

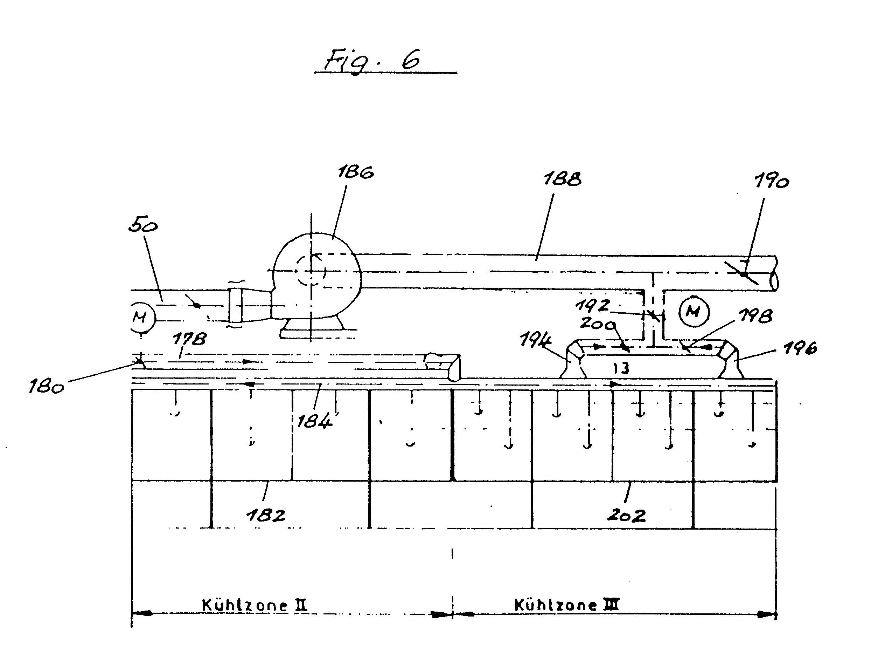

An den Schnellkühlabschnitt 140 schliesst ein Kühlabschnitt 176 an. Diesem wird über eine obere Leitung 174 und über einen nachgeordneten zweiten Kühlabschnitt 182 (Fig. 6) Kühlluft zugeführt, letzteres aufgrund der Saugwirkung des Ventilators 10.

In Fig. 6 ist der Frischluft-Ventilator 186 dargestellt, der die Leitung 50 und hierüber (Fig. 5) die untere Leitung 62 mit Luft versorgt. Von der Leitung 50 aus wird über eine Leitung 178, gesteuert über eine motorbetätigte Steuerklappe 180 einer Kühlleitung 184 auf dem Kühlabschnitt 182 Luft zugeführt. An den Kühlabschnitt 182 schliesst sich ein weiterer Kühlabschnitt 202 an. Das Ansaugrohr 188 des Ventilators 186 führt über eine motorbetätigte Steuerklappe 192 zu Leitungen 194, 196 auf dem Kühlabschnitt 202, in denen wiederum Steuerklappen 200 beziehungsweise 198 angeordnet sind.

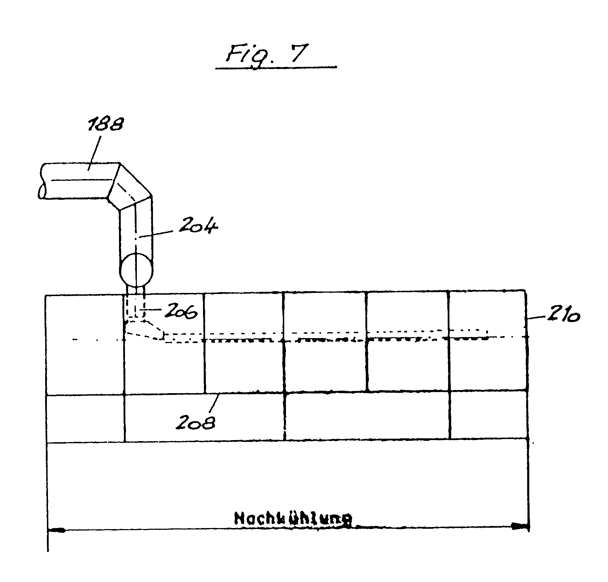

In Fig. 7 ist der letzte (Nachkühl-) Abschnitt 208 des Durchlaufofens dargestellt. Das Saugrohr 188 des Ventilators 186 mündet über ein Rohrstück 204 und einen Kanal 206 in den Nachkühlabschnitt 208, so dass Luft über die am Ende des Abschnittes 208 befindliche Austrittsöffnung 210 für das Brenngut angesaugt wird.

Die Betriebstemperaturen betragen etwa 1200°C im Bereich des Brennabschnittes 128, 800 bis 900°C im Bereich des Schnellkühlabschnittes 140, linear abnehmend 650°C am Anfang des ersten Kühlabschnittes 176 und 200°C am Ende des dritten Kühlabschnittes 202. Die Saugwirkung des Ventilators 10 reicht etwa bis in den Bereich des zweiten Kühlabschnittes 182, in dem etwa eine Temperatur von 300°C herrscht. Im Nachkühlabschnitt 208 wird eine Temperatur von etwa 60 bis 80°C erreicht. Bei allen genannten Temperaturen handelt es sich um Lufttemperaturen.

In Fig. 8 ist eine bevorzugte Ausführungsform eines Brenners 132 dargestellt. In einer Ausnehmung in einer Seitenwand 212 des Durchlaufofens ist ein Keramikrohr 214 aufgenommen, das an beiden Enden übersteht. An einem Ende ist das Keramikrohr mit einer Anschlussvorrichtung 216 für eine Gasleitung versehen, die über ein Aussengewinde 218 befestigt werden kann. Gas strömt von einer Eintrittsöffnung 220 über einen Düseneinsatz 222, der aus temperaturbeständigem Stahl gefertigt sein kann, über eine sich verjüngende Düse 224 zur Düsenöffnung 226. Am in das Ofeninnere ragenden Ende des Keramikrohres 214 sind zwei Aussparungen 228 angeordnet, über die Verbrennungsluft aus dem Ofeninneren angesaugt wird. Nach Zündung des Brenners bildet sich zwischen der Düsenöffnung 226 und der Ausnehmung 228 eine Flamme aus, die sich je nach Brennstoffdruck auch über die Austrittsöffnung des Keramikrohres 214 hinaus erstrecken kann.

Schliesslich wird noch darauf hingewiesen, dass an der nicht dargestellten (gegenüberliegenden) Seitenwand des Ofens ebenfalls Brenner (nicht dargestellt) angeordnet sein können, vorzugsweise in gleicher Zahl wie in der dargestellten Wand.

Der Begriff „feinkeramisches Brenngut" schliesst auch sonderkeramische Produkte wie zum Beispiel Filter aus geschäumtem Aluminiumoxid oder dergleichen ein.

**Patentansprüche**

1. Durchlaufofen für feinkeramisches Brenngut mit einer Aufheizzone, einer mit Brennern versehenen Brennzone und einer sich daran anschliessenden Kühlzone, mit einer am Brenngut-Eintritt angeordneten Gastransport-Einrichtung, welche Gas entgegen der Förderrichtung des Brenngutes von zumindest der Brennzone bis zum Brenngut-Eintritt ansaugt, und zumindest einer Lufttransporteinrichtung zur Durchführung von Luft zur Kühlzone, wobei die Gastransporteinrichtung (10) Gase aus dem Bereich der Kühlzone (140, 176, 182) saugt und direkt durch den Ofenkanal in die Brennzone (42, 78, 80, 126, 128) transportiert, und dass in einem Übergangsbereich (130) zwischen Brennzone (128) und Kühlzone (140) zumindest ein zusätzlicher Brenner (132) angeordnet ist.

2. Durchlaufofen nach Anspruch 1, dadurch gekennzeichnet, dass der Brenner (132) seine Verbrennungsluft nur dem Innenraum des Durchlaufofens entnimmt.

3. Durchlaufofen nach Anspruch 1 oder 2, dadurch gekennzeichnet, dass mehrere zusätzliche Brenner (132, 134, 136, 138) vorgesehen sind.

4. Durchlaufofen nach Anspruch 3, dadurch gekennzeichnet, dass in jeder Seitenwand des Durchlaufofens vier zusätzliche Brenner (132, 134, 136, 138) angeordnet sind.

5. Durchlaufofen nach Anspruch 1 oder einem der folgenden Ansprüche, dadurch gekennzeichnet, dass die Kühlzone in einen Schnellkühlabschnitt (140) und mehrere daran anschliessende Kühl-Unterabschnitte (176, 182, 202, 208) unterteilt ist.

6. Durchlaufofen nach Anspruch 5, dadurch gekennzeichnet, dass die Saugwirkung der Gastransporteinrichtung (10) bis in den Bereich des Kühl-Unterabschnitts (182) reicht, in dem eine Lufttemperatur von etwa 300° C herrscht.

7. Durchlaufofen nach Anspruch 1 oder einem der folgenden Ansprüche, dadurch gekennzeichnet, dass Brenner (44, 46, 48, 82, 106, 120) in der Brennkammer (42, 78, 80, 126, 128) in unregelmässigen Abständen in Förderrichtung des Brennguts voneinander angeordnet sind.

8. Durchlaufofen nach Anspruch 7, dadurch gekennzeichnet, dass in Förderrichtung des Brennguts auf einen mit in regelmässigen Abständen angeordneten Brennern (44, 46, 48) versehenen Brennabschnitt (42) ein nicht mit Brennern versehener Brennabschnitt (78) folgt, an den sich ein mit in regelmässigen Abständen angeordneten Brennern (82, 106, 120) versehener Brennabschnitt (80, 126, 128) anschliesst.

9. Durchlaufofen nach Anspruch 1 oder einem der folgenden Ansprüche, dadurch gekennzeichnet, dass ein Brennerrohr (214) vorgesehen ist, dessen einer Endabschnitt mit einer Vorrichtung (216) zum Anschluss einer Brennstoffleitung versehen ist, und dessen anderer Endabschnitt zumindest eine Ausnehmung (228) zum Ansaugen von Verbrennungsluft aufweist, und das im Inneren mit einer Brennstoff-Führungseinrichtung (222) versehen ist, die in eine Brennstoffdüse (224) ausläuft, die vor der Ausnehmung (228) endet.

10. Durchlaufofen nach Anspruch 9, dadurch gekennzeichnet, dass das Brennerrohr (214) aus Keramik besteht.

11. Durchlaufofen nach Anspruch 9 oder 10, dadurch gekennzeichnet, dass zwei symmetrisch in der Wandung des Brennerrohres (214) angeordnete Ausnehmungen (228) von ovaler Form vorgesehen sind, wobei sich die längere Achse des Ovals parallel zur Längsachse des Brennerrohres (214) erstreckt.

12. Verfahren zum Betrieb eines Durchlaufofens mit einer Aufheizzone, einer Brennzone und einer sich daran anschliessenden Kühlzone, mit einer am Brenngut-Eintritt angeordneten Gastransporteinrichtung, welche Gas entgegen der Förderrichtung des Brenngutes von zumindest der Brennzone bis zum Brenngut-Eintritt ansaugt, und zumindest einer Lufttransporteinrichtung zur Zuführung von Luft zur Kühlzone mit folgenden Schritten:

— Ansaugen von Gasen mittels der Gastransporteinrichtung (10) aus der Kühlzone (140, 176, 182) im Gegenstrom zur Förderrichtung des Brenngutes direkt durch den Ofenkanal in die Brennzone (42, 78, 80, 126, 128) hinein;

— Erhitzen der angesaugten Gase vor Eintritt in die Brennzone (42, 78, 80, 126, 128) auf Brenntemperatur.

13. Verfahren nach Anspruch 12, dadurch gekennzeichnet, dass zum Erhitzen der geförderten Gase zumindest ein Brenner (132) verwendet wird, der nur mit Brennstoff versorgt wird und seine Verbrennungsluft dem geförderten Gas entnimmt.

14. Verfahren nach Anspruch 13, dadurch gekennzeichnet, dass der Brenner (132) mit Gas betrieben wird.

15. Verfahren nach Anspruch 12 oder einem der folgenden Ansprüche, dadurch gekennzeichnet, dass in der Kühlzone (140, 176, 182, 202, 208) ein an die Brennzone (128) anschliessender Schnellkühlabschnitt (140) vorgesehen ist, in welchem die Kühlluft durch das Brenngut auf etwa 800° C bis 900° C erwärmt wird, und einen sich hieran anschliessenden Kühlabschnitt (176, 182, 202), in dem auf etwa 200° C in Förderrichtung des Brenngutes sinkende Kühlluft-Temperaturen herrschen, und dass die Saugwirkung der Gastransporteinrichtung (10) bis etwa in den Bereich im Kühlabschnitt (182) reicht, in welchem eine Temperatur von etwa 300° C herrscht.

16. Verfahren nach Anspruch 12 oder einem der folgenden Ansprüche, dadurch gekennzeichnet, dass das Absaugen von Frischluft mittels einer einzigen Lufttransportvorrichtung (186) und im Bereich des in Förderrichtung des Brennguts letzten Kühlabschnitts (208), dem Frischluft von der Austrittsöffnung des Durchlaufofens zugeführt wird, erfolgt.

## Claims

1. A continuous kiln for fine ceramic products comprising a preheating section, a firing section equipped with burners and a cooling section adjacent thereto, with gas conveying means arranged at the products entrance which takes in gas from at least said firing section to said products entrance in the opposite direction with respect to the conveying direction of said products, and with at least one air transport means for transporting air to said cooling section, whereby said gas conveying means (10) takes in gases from the region of said cooling section (140, 176, 182) said gases being conveyed directly through the kiln channel into the firing section (42, 78, 80, 126, 128), and that at least one additional burner (132) is arranged in a transition region between said firing section (128) and said cooling section (140).

2. A continuous kiln as claimed in claim 1, characterized in that said burner (132) takes its combustion air only from the inside of said kiln.

3. A continuous kiln as claimed in claims 1 or 2, characterized in that several additional burners (132, 134, 136, 138) are provided.

4. A continuous kiln as claimed in claim 3, characterized in that in each side wall of said kiln four additional burners (132, 134, 136, 138) are arranged.

5. A continuous kiln as claimed in claim 1 or any of the following claims, characterized in that said cooling section is subdivided into a rapid-cooling section (140) and several cooling sub-sections (176, 182, 202, 208) adjacent thereto.

6. A continuous kiln as claimed in claim 5, characterized in that the suction of said gas conveying means (10) extends into that region of said cooling sub-section (182) where an air temperature of approximately 300° C prevails.

7. A continuous kiln as claimed in claim 1 or any of the following claims, characterized in that burners (44, 46, 48, 82, 106, 120) are arranged in the firing chamber (42, 78, 80, 128) in irregular distances to each other with respect to the conveying direction of the products.

8. A continuous kiln as claimed in claim 7, characterized in that, in the conveying direction of the products, a firing section portion (42) equipped with burners (44, 46, 48) arranged in regular distances is annexed by a firing section portion (78) not equipped with burners which is annexed by a firing section portion (80, 126, 128) equipped with burners (82, 106, 120) arranged in regular distances.

9. A continuous kiln as claimed in claim 1 or any of the following claims, characterized in that a burner tube (214) is provided, one end section of which has means (216) for connecting a fuel line, and the other end section of which has at least one recess (228) for taking in combustion air, said tube having at its inside fuel guiding means (222) tapering off into a fuel nozzle (224) which ends before said recess (228).

10. A continuous kiln as claimed in claim 9, characterized in that said burner tube (214) is made of ceramics.

11. A continuous kiln as claimed in claims 9 or 10, characterized in that two oval-shaped recesses (228) arranged in symmetric fashion in the wall of said burner tube (214) are provided, where the longer axis of said oval extends in parallel relationship to the longitudinal axis of said burner tube (214).

12. A method for operating a continuously working furnace comprising a preheating section, a firing section and a cooling section adjacent thereto, with gas conveying means arranged at the products entrance for taking in gas from at least said firing section to said products entrance in opposite direction with respect to the conveying direction of said products, and with at least one air transport means for supplying air to said cooling section with the following steps:

— taking in gases by means of said gas conveying means (10) from said cooling section (140, 176, 182) in counterflow with respect to the conveying direction of said products into said firing section (42, 78, 80, 126, 128);

— heating up the gases which have been taken in, before they enter said firing section (42, 78, 80, 126, 128), to firing temperature.

13. A method as claimed in claim 12, characterized in that at least one burner (132) is used for heating up said conveyed gases, said burner (132) being supplied with fuel only and taking its combustion air from said conveyed gases.

14. A method as claimed in claim 13, characterized in that said burner (132) operates on gas.

15. A method as claimed in claim 12 or any of the following claims, characterized in that in said cooling section (140, 176, 182, 202, 208) adjacent to said firing section (128) a rapid-cooling section (140) is provided where the cooling air is heated up by said products to a temperature of approximately 800 to 900° C, and that a cooling section (176, 182, 202) adjacent thereto is provided where temperatures decreasing to approximately 200° C in the conveying direction of said products prevail, and that the suction of said gas conveying means (10) extends approximately up to that region of said cooling section (182) where a temperature of approximatively 300° C prevails.

16. A method as claimed in claim 12 or any of the following claims, characterized in that the intake of fresh air is performed by a single air transport means (186) and in the region of the last, with respect to the conveying direction of said products, cooling section (208) to which fresh air from the exit orifice of said kiln is supplied.

**Revendications**

1. Four de passage continu pour matière à cuire céramique fine comprenant une zone de montée en température, une zone de combustion équipée de brûleurs et une zone de refroidissement qui s'y raccorde, ce four comprenent un appareil de déplacement des gaz qui est disposé à l'entrée de matière à cuire et aspire les gaz à contre-courant par rapport à la direction d'acheminement de la matière, depuis au moins la zone de cuisson jusqu'à l'entrée de matière à cuire, et au moins un appareil de déplacement d'air permettant d'amener de l'air à la zone de refroidissement, four dans lequel l'appareil (10) de déplacement des gaz aspire les gaz hors de la région de la zone de refroidissement (140, 176, 182) et les fait directement passer dans la zone de cuisson (42, 78, 80, 126, 128) en traversant le conduit du four et dans lequel au moins un brûleur supplémentaire (132) est disposé dans une zone de transition (130) située entre la zone de cuisson (128) et la zone de refroidissement (140).

2. Four de passage continu suivant la revendication 1, caractérisé en ce que le brûleur (132) ne prélève son air de combustion qu'à l'intérieur du four de passage continu.

3. Four de passage continu suivant la revendication 1 ou 2, caractérisé en ce qu'il est prévu plusieurs brûleurs supplémentaires (132, 134, 136, 138).

4. Four de passage continu suivant la revendication 3, caractérisé en ce que quatre brûleurs supplémentaires (132, 134, 136, 138) sont disposés dans chaque paroi latérale de ce four de passage continu.

5. Four de passage continu suivant la revendication 1 ou l'une des.revendications suivantes, caractérisé en ce que la zone de refroidissement est divisée en une section de refroidissement rapide (140) et plusieurs sous-sections de refroidissement (176, 182, 202, 208) qui s'y raccordent.

6. Four de passage continu suivant la revendication 5, caractérisé en ce que l'effet d'aspiration de l'appareil de déplacement des gaz (10) s'étend jusque dans la région de la sous-section de refroidissement (182) dans laquelle règne une température de l'air d'environ 300° C.

7. Four de passage continu suivant la revendication 1 ou l'une des revendications suivantes, caractérisé en ce que les brûleurs (44, 46, 48, 82, 106, 120) sont disposés dans la chambre de cuisson (42, 78, 80, 126, 128) avec, entre eux, des espacements irréguliers suivant la direction d'acheminement de la matière à cuire.

8. Four de passage continu suivant la revendication 7, caractérisé en ce que, suivant la direction d'acheminement de la matière à cuire, il est prévu, à la suite d'une section de cuisson (42) pourvue de brûleurs (44, 46, 48) disposés à espacements réguliers, une section de cuisson (78) qui n'est pas pourvue de brûleurs et à laquelle se raccorde une section de cuisson (80, 126, 128) pourvue de brûleurs (82, 106, 120) disposés à espacements réguliers.

9. Four de passage continu suivant la revendication 1 ou l'une des revendications suivantes, caractérisé en ce qu'il est prévu un tube de brûleur (214) dont l'une des sections extrêmes est équipée d'un dispositif (216) permettant le raccordement d'une tuyauterie de combustible et dont l'autre tronçon extrême comporte au moins un évidement (228) permettant d'aspirer de l'air de combustion, et en ce qu'il est pourvu intérieurement d'un dispositif de guidage de combustion (222) qui se termine par une buse à combustible (224) qui débouche en amont de l'évidement (228).

10. Four de passage continu suivant la revendication 9, caractérisé en ce que le tube de brûleur (214) est en céramique.

11. Four de passage continu suivant la revendication 9 ou 10, caractérisé en ce qu'il est prévu deux évidements (228) de forme ovale qui sont disposés de façon symétrique dans la paroi du tube de brûleur (214), le grand axe de l'ovale s'étendant parallèlement à l'axe longitudinal du tube de brûleur (214).

12. Procédé permettant le fonctionnement d'un four de passage continu comportant une zone de montée en température, une zone de combustion et une zone de refroidissement qui s'y raccorde, ce four comportant un appareil de déplacement des gaz qui est disposé à l'entrée de matière à cuire et aspire les gaz à contre-courant par rapport à la direction d'acheminement de la matière à cuire, depuis au moins la zone de cuisson jusqu'à l'entrée de matière à cuire, et au moins un appareil de déplacement d'air permettant d'amener de l'air à la zone de refroidissement, ce procédé comportant les opérations suivantes:

— aspiration des gaz à partir de la zone de refroidissement (140, 176, 182), à l'aide du dispositif de déplacement des gaz (10) et à contre-courant par rapport à la direction d'acheminement de la matière à cuire, en passant directement par le conduit du four pour parvenir dans la zone de cuisson (42, 78, 80, 126, 128),

— chauffage des gaz aspirés, avant leur entrée dans la zone de cuisson (42, 78, 80, 126, 128), jusqu'à la température de cuisson.

13. Procédé suivant la revendication 12, caractérisé en ce que, pour le chauffage des gaz que l'on fait se déplacer, on utilise au moins un brûleur (132) qui n'est alimenté qu'en combustible et qui prélève son air de combustion sur les gaz que l'on fait se déplacer.

14. Procédé suivant la revendication 13, caractérisé en ce qu'on fait travailler le brûleur (132) au gaz.

15. Procédé suivant la revendication 12 ou l'une des revendications suivantes, caractérisé en ce que, dans la zone de refroidissement (140, 176, 182, 202, 208), il est prévu une section de refroidissement rapide (140) qui se raccorde à la zone de cuisson (128) et dans laquelle l'air de refroidissement est réchauffé par la matière de cuisson jusqu'à environ 800° C à 900° C et, s'y raccordant, une section de refroidissement (176, 182, 202) dans laquelle règnent des températures d'air de refroidissement chutant jusqu'à environ 200° C suivant la direction d'acheminement de la matière à cuire, et en ce que, dans ce cas, l'effet d'aspiration de l'appareil de déplacement des gaz (10) s'étend sensiblement jusqu'à la partie de la section de refroidissement (182) dans laquelle règne une température d'environ 300° C.

16. Procédé suivant la revendication 12 ou l'une des revendications suivantes, caractérisé en ce que l'aspiration d'air frais s'effectue à l'aide d'un appareil unique de déplacement d'air (186) et dans la partie de la section de refroidissement (208) qui est la dernière suivant la direction d'acheminement de la matière à cuire et à laquelle de l'air frais est amené en provenance de l'ouverture de sortie du four de passage continu.

Fig. 1

Vortrockner I | Vortrockner II | Vortrockner III

EP 0 245 389 B1

Fig. 2

EP 0 245 389 B1

Brenner

Fig. 3

Fig. 4

Brenner

Brenner

50

110

112

114

116

118

120

122

124

126

128

62

Fig. 5

Kühlzone I

Brenner

Schnellkühlzone

Fig. 6

_Fig. 7_

Fig. 8

EP 0 245 389 B1